# EUROPEAN PATENT SPECIFICATION

(11) **EP 3 594 515 B1**
(45) Date of publication and mention of the grant of the patent: **25.08.2021**
(21) Application number: 19186278.8
(22) Date of filing: 15.07.2019
(51) Int. Cl.: F16C 3/035, F16C 3/02, F16C 29/04, F16C 33/58, F16C 33/64, B29C 39/10

(54) **LINEAR GUIDE AND PROCESS TO PRODUCE SUCH A LINEAR GUIDE**
LINEARE FÜHRUNG UND PROCESS UM DIESE LINEARE FÜHRUNG HERZUSTELLEN
GUIDE LINEAIRE ET PROCÉDÉ DE FABRICATION D'UN TEL GUIDE LINÉAIRE

(30) Priority: 13.07.2018 IT 201800007189
(43) Date of publication of application: 15.01.2020
(73) Proprietor: JOFA S.R.L., 35127 Padova (IT)
(72) Inventor: FARAGLIA, Alessandro, 35020 ALBIGNASEGO (IT)
(74) Representative: Pallini Gervasi, Diego

(56) References cited:
- EP-A1- 0 335 781
- EP-A1- 1 353 139
- EP-A1- 1 512 607
- WO-A1-2013/128595
- CN-U- 206 036 014
- GB-A- 2 207 109
- US-A- 5 591 084
- US-A1- 2010 092 114
- US-A1- 2010 294 654

## Description

The present invention relates to a linear guide and a method of manufacturing a linear guide. In particular, the present invention relates to a linear guide made of composite material and to the method of manufacturing it.

### BACKGROUND ART

Linear guides, or guides with linear movement, are guides designed to allow movement along a single direction.

Several linear guides exist on the market. They are used for various applications in different sectors, such as the railway field, the field of aeronautics, medicine, logistics, in special vehicles, in industrial machines and in building.

Included among the various types of linear guides are telescopic guides, which are particularly adapted for the sliding of domestic or industrial drawers, compartments, doors or seats and for several further applications. They usually comprise a fixed element and a movable element, also referred to as a track and slide, respectively, between which a means is interposed for reducing friction, such as ball cages, rolling pins, or other types of bearings.

Among the various applications for linear guides are also linear actuators, which are used in advanced fields, such as industrial robotics, semi-conductors, computer components.

Linear guides of the known type are generally made of metal, steel, or other metal alloy. Prior art document GB2207109 A shows an example of known linear guides. If, on the one hand, this provides guides with good mechanical resistance, on the other, it has problems in terms of thermal stability, rigidity and weight.

Thus, the Applicant has decided to overcome such drawbacks by making linear guides with composite materials, i.e. making the track and slide with such materials. In fact, composite materials have high thermal stability, high rigidity, low specific weight and, at the same time, good mechanical resistance. However, guides made with composite materials have the problem of not being adapted for use with bearings of the known type. In fact, the surfaces in contact with the bearings require a hardness of at least 50HRC, while composite materials have a hardness of about 10-15HRC. Such a hardness would compromise the good working of the system which would face rapid wear.

Therefore, the Applicant has decided to provide the surfaces of the track and slide, designed to touch the bearing, with a metal sheet, or another low thickness metal element.

Then, the Applicant tested that, by gluing the sheets to said surfaces, it is impossible to obtain an accurate positioning. Furthermore, they tend to separate quickly from the composite materials with evident drawbacks.

Therefore, the Applicant attempted to co-mold the metal sheets to the track and slide. However, such a process has notable drawbacks due to the significant difference in the thermal dilation coefficient between the composite material and the metal material. In fact, the cooling, which follows the molding, needed for the hardening of the composite resin, creates thermal tensioning for the interface between the two materials, which can give rise to the phenomenon of "delamination", i.e. detachment of the metal sheet from the composite material. Such a limit is well-known in the field of composite materials. Thus, generally, the metal parts to be co-molded undergo pre-treatments adapted to roughen the surfaces to be coupled to the composite, so as to increase the grip thereof. Such known pre-treatments generally comprise a process of sand-blasting or processing with machine tools adapted to make grooves on the surfaces of interest. However, the Applicant has verified that such pre-treatments, known in the field of composites, are not implementable in this context, due to the reduced thicknesses of the sheets. In fact, a process of sandblasting would compromise the surfaces designed to touch the bearings, and common machine tools are not suitable for processing metal elements with reduced thicknesses, as in this case.

Therefore, at present, no linear guides provided with high rigidity, good thermal stability, low specific weight and good mechanical resistance exist.

Therefore, no processes are known for obtaining such guides.

Nor are any methods known for manufacturing metal sheets integrated on the surfaces of elements made of composite materials.

### SUMMARY OF THE INVENTION

Thus, it is an object of the present invention to provide a linear guide and a process of manufacturing a linear guide capable of overcoming the aforesaid drawbacks.

In particular, it is a first object of the present invention to provide a light linear guide which is mechanically resistant, thermally stable and provided with high rigidity.

It is a further object of the present invention to provide a linear guide made of composite material which does not have problems of quick wear or malfunction.

It is a further object of the present invention to provide a linear guide made of composite material which is cheap.

It is another object of the present invention to provide a process of manufacturing a linear guide, with the aforesaid features, which is simple, cheap and effective. Finally, the present invention aims to provide a method of manufacturing an element made of composite material provided with a thin sheet at an outer surface thereof, which is simple, cheap and effective.

The first objects are achieved by means of a linear guide, comprising an outer tubular element; an inner tubular element, adapted to slide telescopically in said outer tubular element; and friction reduction means interposed between said inner tubular element and said outer tubular element, said friction reduction means comprising n rolling bearings, wherein n ≥ 1, each rolling bearing being provided with rolling elements, wherein the outer tubular element and the inner tubular element are made of a composite material and wherein said rolling elements slide on two thin sheets, a first thin sheet positioned on an outer face of the inner tubular element and a second thin sheet positioned on a corresponding inner face of the outer tubular element.

A linear guide with such features is light, mechanically resistant, thermally stable and provided with high rigidity due to the fact that the two tubular elements are made of a composite material.

Furthermore, the tubular shape of the inner and outer elements makes the linear guide particularly resistant to mechanical stress.

Furthermore, such features result in a linear guide which has no problems of friction between the parts thereof due to the presence of n rolling bearings, the rolling elements of which slide on thin sheets, as defined below.

Thus, such a guide overcomes the aforesaid problems of quick wear and malfunction.

Furthermore, such a linear guide is simple and cheap.

The second objects of the present invention are achieved by means of a process of manufacturing a linear guide, comprising an outer tubular element made of a composite material; an inner tubular element made of a composite material, adapted to slide telescopically in said outer tubular element; and n rolling bearings interposed between said inner tubular element and said outer tubular element, said process comprising the steps of:
a. providing n first thin sheets and n second thin sheets;
b. engraving a surface of each thin sheet by means of photogravure;
c. co-molding the first thin sheets to the inner tubular element and the second thin sheets to the outer tubular element;
d. coupling the inner tubular element to the outer tubular element, inserting it telescopically therein, interposing the aforesaid rolling bearings at the thin sheets, so that the rolling elements of said rolling bearings slide on said thin sheets.

Such a process allows a linear guide to be obtained, which is light, mechanically resistant, thermally stable and provided with high rigidity, as it allows the pairing of the composite materials with traditional-type rolling bearings. This is possible due to the integration of the thin sheets, on which the rolling elements slide, on the surfaces of the tubular elements.

Furthermore, such a process allows a highly precise positioning of the thin sheets, due to the fact that they are co-molded to the tubular elements.

Furthermore, such a process overcomes the aforesaid problems of delamination of the tubular elements. In fact, the presence of a step of engraving a surface of the thin sheets allows a greater grip between the thin sheet and the composite material.

Finally, a process with such features, does not risk compromising the smooth surface of the thin sheet designed for the sliding of the rolling elements due to the use of photogravure. In fact, such a process allows the engraving depth of the drawing to be controlled with high accuracy. Furthermore, since it is an incision, which is made by etching, it exposes the crystal grain of the metal resulting in a more resistant sheet interface/composite material, in the finished product. According to a preferred embodiment of the process of the invention, step b of engraving a surface of each thin sheet by means of photogravure includes engraving, on such a surface, a drawing comprising first grooves which are oblique to the longitudinal axis of the thin sheet and second grooves which are oblique to the longitudinal axis of the thin sheet and perpendicular to the first grooves. In fact, such directions interrupt the main directions of tensioning which are generally orthogonal to the longitudinal axis of the thin sheet.

The final objects of the present invention are achieved by means of a method of manufacturing an element made of a composite material provided with at least one thin sheet at at least one outer surface thereof, comprising the steps of:
i. providing at least one thin sheet;
ii. engraving at least one surface of the thin sheet by means of photogravure;
iii. co-molding the thin sheet to the element made of a composite material.

Such a method allows the technological limits linked to the co-molding of thin sheets with composite materials to be overcome. In fact, the step of pre-treating the surface of the thin sheet so as to emboss it allows a better grip to be obtained between the two different materials. Furthermore, the fact of pre-treating the thin sheets by means of photogravure allows the problems occurring with the known pre-treatments related to elements of a reduced thickness to be overcome.

Thus, such a method allows the effective integration of a thin surface sheet into any element made of a composite material and with contained costs.

According to a preferred embodiment, step iii is preceded by a step of conveniently placing the thin sheet inside a die so that the engraved surface is in contact with the surface of the composite material after molding.

According to preferred embodiments of the linear guide, said first thin sheet is co-molded to the inner tubular element and said second thin sheet is co-molded to said outer tubular element.

This results in a precise positioning of the thin sheets and prevents the latter from separating from the tubular elements.

Preferably, the matrix of said composite material is a thermosetting resin. Such resins are preferably selected from: epoxy resins, polyester resins and vinyl ester resins. Such resins have a good capacity for bonding with metal materials.

Advantageously, the reinforcement of said composite material is of the fibrous type, preferably selected from: carbon fibers, glass fibers, basalt fibers, polyester fibers. The use of carbon fibers is particularly advantageous because not only do they have high elastic module, but they also result in a composite with a high elastic module.

According to the most preferred embodiment, the composite material comprises epoxy resin with carbon fibers. In fact, the Applicant has noted that optimal results are obtained with such materials.

Preferably, said outer tubular element and said inner tubular element are polyhedral shaped with a constant section.

In particular, the section of said outer tubular element and said inner tubular element has the shape of a regular polygon with N sides, wherein N ≥ 3.

Advantageously, if N is an even number, the number n of rolling bearings is N/2 and the rolling bearings are arranged on alternate faces of the polyhedron, or n is N, whereas, if N is an odd number, n is N. This results in high precision of the linear guides. In other words, when the polygon has a number N of even sides, it is possible to use N bearings, that is one bearing for each face of the polyhedron, or use N/2 bearings, or alternatively place them on the side faces of the polyhedron so as to balance the forces acting thereon, whereas, if the sides N are odd, it is advantageous to use one bearing for each face of the polyhedron. When high precision is not required for the guide, it is possible to use a lower number of bearings, as long as they are balanced.

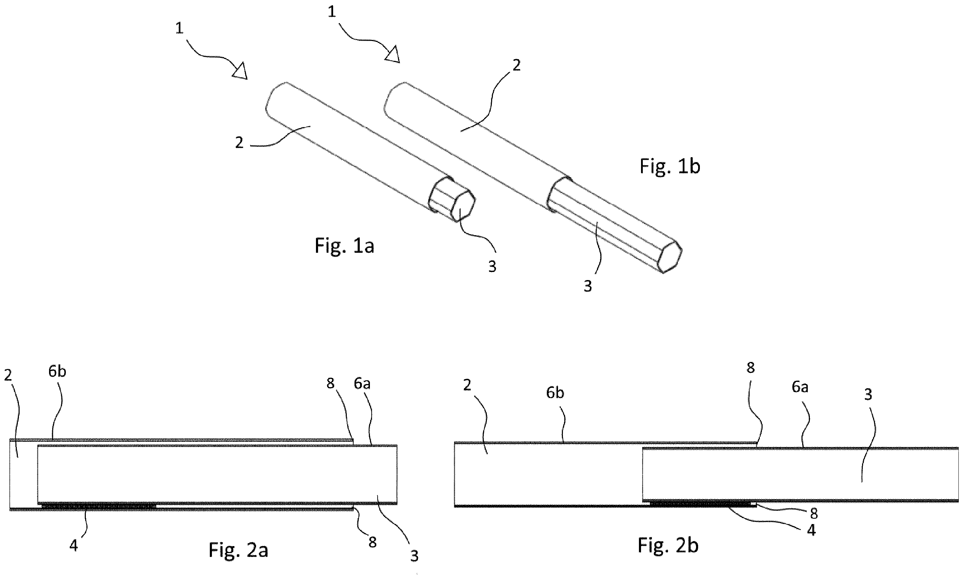

According to the preferred embodiment, shown in figures 1 - 5, said regular polygon is a hexagon and the number n of rolling bearings is three.

Such a solution is optimal in terms of balance between weight and mechanical resistance. In fact, by increasing the number of sides of the polygon of the section, the volume increases and thus the weight of the tubular element, so, the smaller N is, the smaller the weight will be. On the other hand, by increasing N, the moment of inertia increases, and thus the rigidity and resistance to bending, improving the mechanical characteristics. Therefore, the Applicant has found that by using N=6, a good compromise is obtained between the two factors.

Alternatively, the section of said outer tubular element and said inner tubular element has a round shape and the number n of rolling bearings is 3. In this case, to manufacture such tubular elements, a spindle is used with a constant curvature radius, with consequent improved compaction. In fact, it is more homogenous and effective.

Advantageously, the linear guide also comprises means adapted to prevent circumferential displacements of the rolling bearings and/or means adapted to prevent axial displacements of the rolling bearings. Such means can be obtained on the outer tubular element or on the inner tubular element.

Preferably, the rolling elements of the rolling bearings are selected from: balls, cylindrical rollers, conical rollers and small rollers.

According to an alternative embodiment, the linear guide also comprises an intermediate tubular element, interposed between said outer tubular element and said inner tubular element, adapted to slide telescopically in said outer tubular element and for the telescopic sliding of said inner tubular element therein, n first rolling bearings being interposed between the outer tubular element and the intermediate tubular element, and/or n second rolling bearings being interposed between the intermediate tubular element and the inner tubular element; the rolling elements of said first rolling bearings being adapted to slide on a first thin sheet positioned on an outer face of the inner tubular element and on a further thin sheet positioned on a corresponding inner face of the intermediate tubular element and/or the rolling elements of said second rolling bearings being adapted to slide on a further thin sheet positioned on an outer face of the intermediate tubular element and on a second thin sheet positioned on a corresponding inner face of the outer tubular element.

The presence of an intermediate tubular element could be useful if it were necessary to have a guide with a long travel in a reduced space.

The present invention also relates to a linear actuator comprising at least one linear guide, as described in this context. Such an actuator results in the same advantages as the linear guide.

In this description and in the following claims, the term "thin sheet" indicates a metal sheet or a sheet of metal alloy having a thickness of less than 4mm and a surface hardness of no less than 50HRC.

### LIST OF DRAWINGS

Further features and advantages of the invention will become more apparent from the discussion of the following detailed description of preferred, but non-exclusive, embodiments of the linear guide, of the process of manufacturing a linear guide, and of the method of manufacturing an element made of a composite material, provided with a thin sheet at an outer surface thereof, illustrated by way of a nonlimiting example, with the support of the accompanying drawings, in which:
- figures 1a and 1b show perspective views of a linear guide according to a preferred embodiment of the invention, in the retracted and extended position, respectively;
- figures 2a and 2b show diagrammatic longitudinal section views of the linear guide in figures 1a and 1b, respectively;
- figure 3 shows a cross-section view of the linear guide in figure 1a;
- figure 4 shows an exploded view, with an enlarged detail, of the linear guide in the preceding figures;
- figure 5 shows a perspective view of a detail of an outer tubular element of a linear guide, according to one embodiment of the present invention;
- figure 6 shows a perspective diagrammatic view of a linear guide according to a second embodiment of the invention;
- figure 7 shows a cross-section view of the linear guide in figure 6; and
- figure 8 shows an enlarged view of a detail in figure 7.

### DETAILED DESCRIPTION

With reference to figures 1 - 8, a linear guide according to the present invention is globally denoted with reference numeral 1.

The linear guide 1 comprises, in a known manner, an outer tubular element 2, also named as a track or sheath, and an inner tubular element 3, also named as a slide or shaft. Such tubular elements 2, 3 are telescopic, so that the inner tubular element 3 slides telescopically inside the outer tubular element 2.

According to the present invention, the outer tubular element 2 and the inner tubular element 3 are made of a composite material, so as to give the linear guide 1, the advantageous properties linked to such materials, including low specific weight, good mechanical resistance and thermal stability.

Friction reduction means are interposed between the inner tubular element 3 and the outer tubular element 2. The latter comprise at least one rolling bearing 4. In particular, such friction reduction means comprise n rolling bearings 4, wherein n is a whole number greater than or equal to 1, that is n ≥ 1.

Each of such rolling bearings 4 is provided with rolling elements, such as, for example, balls 10, cylindrical rollers, conical rollers or small rollers 5. Each rolling bearing 4 comprises at least two rolling elements.

According to the present invention, said rolling elements slide on two thin sheets 6a, 6b. In particular, they slide on one side on a first thin sheet 6a positioned on an outer face of the inner tubular element 3 and on the other on a second thin sheet 6b positioned on an inner face of the outer tubular element 2. Thereby, the rolling elements only contact the thin sheets 6a e 6b, during the use thereof, and they do not contact further surfaces of the tubular elements 2, 3, which could be unsuitable.

The first thin sheets 6a are co-molded to the inner tubular element 3 and the second thin sheets 6b are co-molded to the outer tubular element 2, as will be explained better below.

Preferably, the outer tubular element 2 and the inner tubular element 3 are made of the same composite material. The latter has a matrix, preferably of the polymeric type, in which the polymer is selected from thermosetting resins, such as epoxy resins, vinyl ester resins and a reinforcement, preferably of the fibrous type, selected from carbon fibers, glass fibers, basalt fibers and polyester fibers. According to a preferred embodiment of the invention, the composite material comprises an epoxy resin and carbon fibers.

Composite materials with glass fibers can be provided for low-cost solutions.

The first thin sheets 6a and the second thin sheets 6b can be made of any metal material or metal alloy, but preferably, they are made of aluminum, so they are inexpensive, or titanium, to give increased hardness and lightness and thus allow a further reduction in the thickness of said thin sheets.

Preferably, said first thin sheets 6a and said second thin sheets 6b have a thickness from 0.6 mm to 1.5 mm. Advantageously, such a thickness is of 1.2 mm. According to some embodiments, the thin metal sheets are covered by a ceramic layer, so they are higher performing.

The tubular elements 2 and 3 have an oblong polyhedral shape with a constant section. In particular, according to preferred embodiments, the cross-section of said tubular elements is a polygon with N sides, wherein N is a whole number, greater than or equal to 3, that is N ≥ 3. Thus, such a section will be triangular, rectangular, square, pentagonal, hexagonal, heptagonal, octagonal, etc. According to the most preferred embodiment, shown in figures 1 - 5, such a section is hexagonal for the reasons explained above.

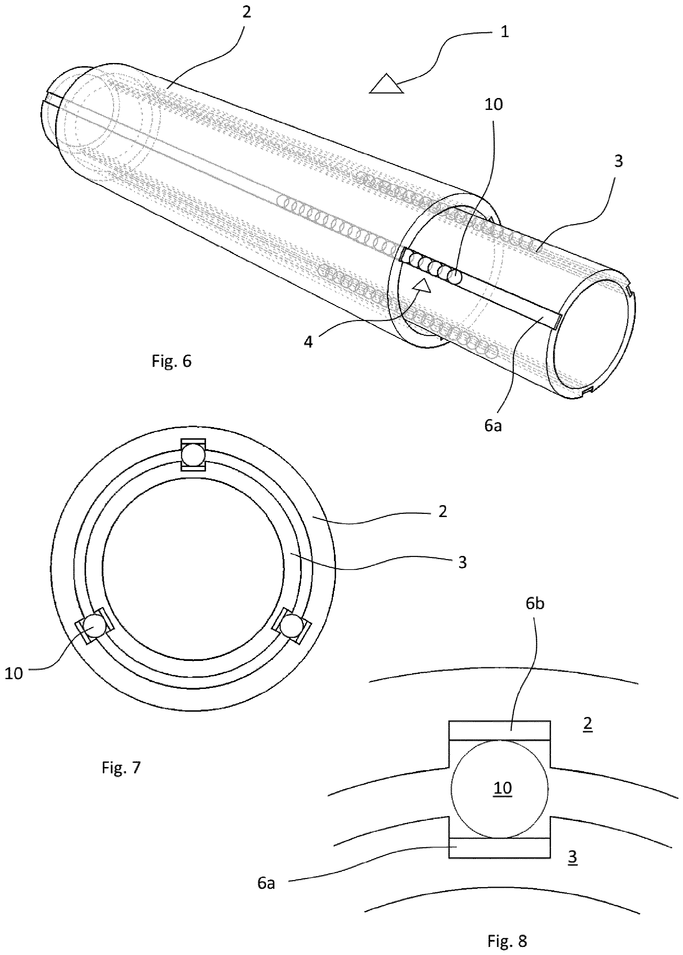

Alternatively, the tubular elements 2 and 3, have a round cross-section, as can be seen in figures 6 - 8. In such an embodiment, the inner tubular element 3 has, on the outer surface thereof, three longitudinal grooves, arranged at 120^{º} from one another, adapted to receive the first thin sheets 6a. Similarly, the outer tubular element 2 has, on the inner surface thereof, three corresponding longitudinal grooves arranged at 120^{º} from one another, adapted to receive the second thin sheets 6b.

Preferably, the outer tubular element 2 and the inner tubular element 3 have the same shape, while the dimensions of the outer tubular element 2 are greater than the dimensions of the inner tubular element 3 so as to be able to contain it.

As mentioned previously, n rolling bearings 4 are interposed between the inner 3 and outer 2 tubular element. The number n of rolling bearings 4 placed between the tubular elements 2 and 3 depends on several factors, such as, the applications for which the linear guide 1 is intended, the level of precision required, the materials used and the shape of the tubular elements 2, 3. The Applicant has found that, in the case of a polygonal section, to obtain high precision, it is necessary to use as many rolling bearings 4 as the number of sides of the polygon of the section of the tubular elements 2, 3. In other words, one rolling bearing 4 is placed at each face of the polyhedron, thus n = N.

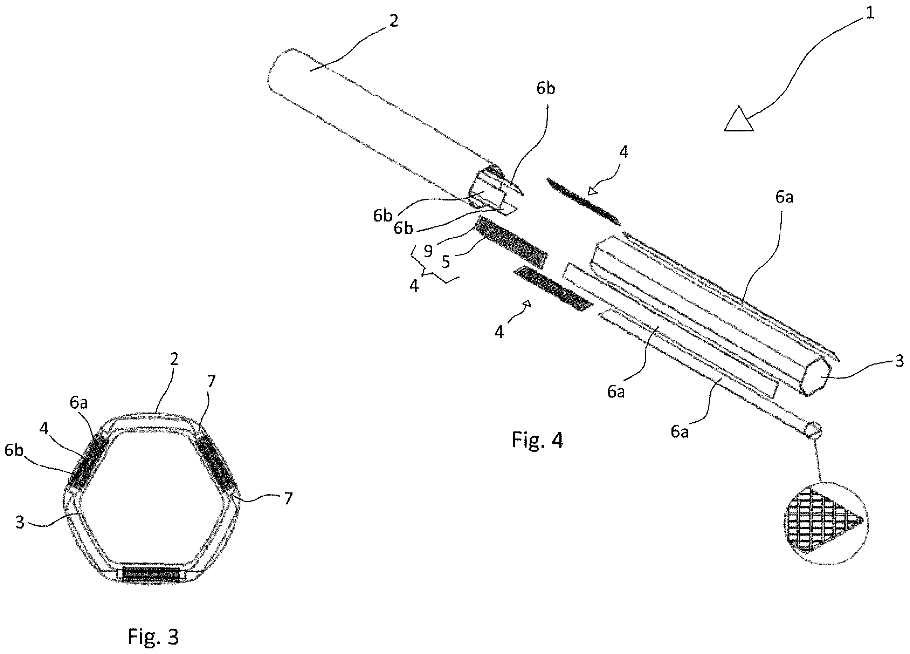

However, if N is an ever number, it is possible to obtain an optimal precision with a number n of rolling bearings 4 corresponding to N/2, arranging the rolling bearings 4 on alternate faces of the polyhedron. Such an arrangement can be seen in figures 3 and 4, which shows how the rolling bearings 4 are arranged on the first, third and fifth face of the hexagonal polyhedron. Thus, in this case N = 6 and n = 3. In the case of a round cross-section, it is preferable to use three rolling bearings 4, arranged at 120^{º} from one another at the aforesaid longitudinal grooves.

In figure 3, which shows an enlarged view of the cross-section of the linear guide 1, it is also possible to note how the linear guide 1 is provided with means adapted to prevent circumferential displacements of the rolling bearings 4. Said means are adapted to prevent the rolling bearings 4 from translating circumferentially, coming into contact with the surfaces of the tubular element 2, 3, which are not provided, causing malfunction and wear of the linear guide 1. Said means comprise stops 7, obtained on the inner surface of the outer tubular element 2. However, they can also be obtained on the outer surface of the inner tubular element 3.

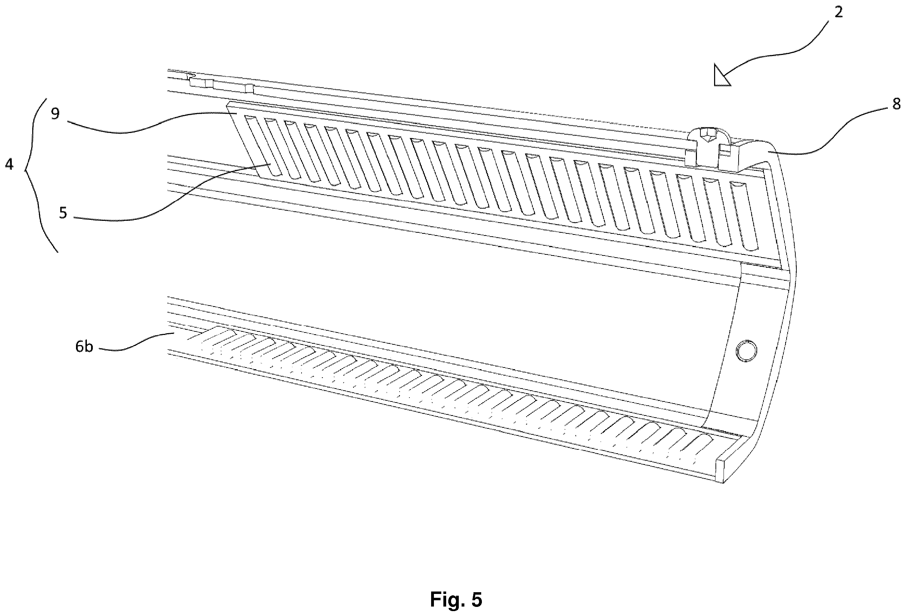

Furthermore, advantageously, the linear guide 1 is also provided with means adapted to prevent axial displacements of the rolling bearings 4. They prevent the rolling bearings 4 from translating longitudinally, exiting the outer tubular element 2 and thus separating from the linear guide 1, with consequent malfunction and/or wear of the linear guide 1 itself. Such means comprise a circumferential tongue 8, placed at the open end of the outer tubular element 2. It can be seen better in figure 5. Alternatively, such means can be obtained on the inner tubular element 3. Although the means adapted to prevent axial displacements of the rolling bearings 4 are not disclosed in the second embodiment, the presence thereof is also included in such cases, or in cases of a cylindrical section of the tubular elements. According to the first embodiment, shown in figures 1 - 5, the rolling elements of the rolling bearings 4 are preferably small rollers 5, also referred to as needles. They are arranged facing and parallel to one another and they are supported by a casing 9. Each casing 9 is provided with at least two rollers 5, but there can also be more.

Whereas, according to the second embodiment, shown in figures 6-8, said rolling bearings 4 comprise adjacent balls 10.

The inner tubular element 3 is movable between a retracted position, in which it is substantially entirely contained in the outer tubular element 2 (figures 1a and 2a) and an extended position, in which most of the length thereof is external to the outer tubular element 2 (figures 1b and 2b).

The linear guide 1, can comprise an intermediate tubular element, interposed between the outer tubular element 2 and the inner tubular element 3, adapted to slide telescopically in the outer tubular element 2 and for the telescopic sliding of the inner tubular element 3 therein. In this case, n first rolling bearings 4 are interposed between the outer tubular element 2 and the intermediate tubular element and/or n second rolling bearings 4 are interposed between the intermediate tubular element and the inner tubular element 3 and the rolling elements of said first rolling bearings 4 are adapted to slide on a first thin sheet 6a positioned on an outer face of the inner tubular element 3 and on a further thin sheet positioned on a corresponding inner face of the intermediate tubular element and/or the rolling elements of said second rolling bearings 4 are adapted to slide on a further thin sheet positioned on an outer face of the intermediate tubular element and on a second thin sheet 6b positioned on a corresponding inner face of the outer tubular element 2.

The linear guide 1, can be provided with a motor and motion transmission means, so as to form a linear actuator.

According to a second aspect thereof, the invention relates to a process of manufacturing a linear guide 1, comprising an outer tubular element 2 made of a composite material; an inner tubular element 3 made of a composite material, adapted to slide telescopically in said outer tubular element 2; and n rolling bearings 4 interposed between said inner tubular element 3 and said outer tubular element 2.

Such a process comprises a first step a of providing n first thin sheets 6a and n second thin sheets 6b. Such thin sheets 6a, 6b have suitable shape and dimensions for the faces of the tubular elements 2, 3 to be manufactured.

Then there is included a step b of engraving a surface of each thin sheet 6a, 6b by means of photogravure. It is a processing technique which includes engraving a bas-relief by means of photoetching, with optimal control of the engraving depth. Furthermore, the etching operation exposes the crystal grain of the metal, this results in a more resistant sheet interface/composite material in the finished product. Since it is a technique of the known type, it will be described no further. According to preferred embodiments, such a step b includes engraving a drawing on the surface of each thin sheet 6a, 6b comprising first grooves which are oblique to the longitudinal axis of the thin sheet and second grooves which are oblique to the longitudinal axis of the thin sheet and perpendicular to the first grooves, as shown in detail in figure 4. However, different drawings could be included.

Then, there is included a step c of co-molding the first thin sheets 6a to the inner tubular element 3 and the second thin sheets 6b to the outer tubular element 2. Such a step can be divided into two consecutive or simultaneous sub-steps:
c'. co-molding the first thin sheets 6a to the inner tubular element 3;
c". co-molding the second thin sheets 6b to the outer tubular element 2.

The co-molding steps can take place by means of any process known in the field of composites, such as molding of pre-pregs (or pre-impregnated matrix fibers) by means of compression in a die or by means of a process in autoclave, *filament winding,* injection molding. The most preferred processes are pre-preg molding and *filament winding,* since they allow the fibers of the reinforcement material to be oriented, thus giving the finished product desired mechanical characteristics. Injection molding is generally for thermoplastic matrices and short, non-oriented reinforcement fibers.

If the manufacturing process comprises the use of a die, that is both in the case of pre-preg molding in autoclave and pre-preg molding by means of compression molding, before step c, there is included a step of conveniently placing said n first thin sheets 6a inside a die for the inner tubular element 3 and said n second thin sheets 6b inside a die for the outer tubular element 2, so that the engraved surfaces are in contact with the composite material, after molding, and so that the position of the first thin sheets 6a corresponds to the position of the second thin sheets 6b after assembly. In other words, after determining n, i.e. how many rolling bearings 4 to use and where to position them, the thin sheets 6a and 6b are placed at the faces of the tubular elements 2, 3 designed to contact said rolling bearings 4. Furthermore, the first thin sheets 6a are placed so that the smooth surface is facing outwards and the engraved surface inwards, that is towards the composite material. Similarly, the second thin sheets 6b are placed so that the engraved surface is facing the composite material and the smooth surface towards the rolling bearing 4.

Optionally, there is included a step of applying a matrix layer on the embossed surfaces of the thin sheets 6a, 6b. Preferably, such a layer has a thickness from 0,4mm to 0,8mm, depending on the dimensions of the thin sheets. Such a step increases the cohesion between the composite and thin sheets and allows a reduction in the quantity of pre-impregnated fibers needed, with a reduction in costs.

Then, there is included the step of inserting sheets of pre-impregnated matrix fibers inside the die of said inner tubular element 3 and inside the die of said outer tubular element 2.

Then, the polymerization and co-molding steps are included.

Such steps are implemented by subjecting the two dies to a pressure of about 6-8 bar and to a temperature of about 120^{º}C -130^{º}C.

After cooling, the coupling of the inner tubular element 3 to the outer tubular element 2 is provided, according to a step d. In particular, the inner tubular element 3 is inserted telescopically in the outer tubular element 2, interposing the aforesaid n rolling bearings 4 at the thin sheets 6a, 6b, so that the rolling elements of said rolling bearings 4 slide on said thin sheets 6a, 6b.

If the linear guide 1 also comprises an intermediate tubular element, and if a die is used, the manufacturing process comprises the further steps of:
- providing 2n further thin sheets;
- engraving a surface of each further thin sheet by means of photogravure;
- conveniently placing said 2n further thin sheets inside a die for the intermediate tubular element, so that the engraved surfaces are in contact with the composite material after molding and so that the position of the further thin sheets corresponds to the position of the first thin sheets 6a and the second thin sheets 6b after assembly;
- inserting sheets of pre-impregnated matrix fibers inside the die of said intermediate tubular element;
- polymerizing the matrix of the composite material and co-molding the further thin sheets to the intermediate tubular element;
- coupling the intermediate tubular element to the inner tubular element 3 and to the outer tubular element 2, inserting it telescopically therein, inside the outer tubular element 2, and inserting the inner tubular element 3 telescopically therein, interposing the aforesaid n rolling bearings 4 at the thin sheets 6a, 6b and further thin sheets, so that the rolling elements of said rolling bearings 4 slide on said thin sheets 6a, 6b and on said further thin sheets.

The co-molding of the intermediate tubular element results in a tubular element provided with n further thin sheets on the inner surfaces thereof, for coupling to the inner tubular element 3, and n further thin sheets on the outer surfaces thereof, for coupling to the outer tubular element 2.

If step c of co-molding was carried out by means of *filament winding* to obtain the outer tubular element 2, the spindle used for the winding of the filaments would act as a die, so, before starting the winding, there would be included a step of positioning and locking the thin sheets onto the outer surface of the spindle. According to a third aspect, the invention relates to a method of manufacturing an element made of a composite material provided with at least one thin sheet 6a, 6b at at least one outer surface thereof, comprising the steps of:
i. providing at least one thin sheet 6a, 6b;
ii. engraving at least one surface of the thin sheet 6a, 6b by means of photogravure;
iii. co-molding the thin sheet 6a, 6b to the element made of a composite material.

Step iii could be preceded by a step of conveniently placing the thin sheet 6a, 6b inside a die so that the engraved surface is in contact with the surface of the composite material after molding.

If the thin sheets 6a, 6b did not interact with the rolling bearings, step ii could include engraving both surfaces, by engraving identical or different drawings on the two surfaces of the thin sheets 6a, 6b.

For the purpose of satisfying specific, contingent needs, those skilled in the art can make further modifications and variations to the linear guide 1, to the process of manufacturing such a linear guide 1, and to the method of the invention, without departing from the scope of protection of the present invention as defined in the appended claims.

## Claims

1. A linear guide (1) comprising: an outer tubular element (2); an inner tubular element (3), adapted to slide telescopically in said outer tubular element (2); and friction reduction means interposed between said inner tubular element (3) and said outer tubular element (2), said friction reduction means comprising n rolling bearings (4), where n ≥ 1, each rolling bearing (4) being provided with rolling elements, wherein the outer tubular element (2) and the inner tubular element (3) are made of a composite material and wherein said rolling elements slide on two thin sheets (6a, 6b) of metal, a first thin sheet (6a) of metal positioned on an outer face of the inner tubular element (3) and a second thin sheet (6b) of metal positioned on a corresponding inner face of the outer tubular element (2).

2. A linear guide (1) according to claim 1, wherein said first thin sheet (6a) is co-molded with the inner tubular element (3) and said second thin sheet (6b) is co-molded with said outer tubular element (2).

3. A linear guide (1) according to claim 1 or 2, wherein the matrix of said composite material is a thermosetting resin and the reinforcement of said composite material is of the fibrous type.

4. A linear guide (1) according to claim 3, wherein the thermosetting resin is selected from: epoxy resins, polyester resins and vinyl ester resins, and the reinforcement is selected from: carbon fibers, glass fibers, basalt fibers, polyester fibers.

5. A linear guide (1) according to claim 4, wherein the composite material comprises epoxy resin with carbon fibers.

6. A linear guide (1) according to one of the preceding claims, wherein said outer tubular element (2) and said inner tubular element (3) have a polyhedral shape with a constant section.

7. A linear guide (1) according to claim 6, wherein the section of said outer tubular element (2) and inner tubular element (2) has the shape of a regular polygon with N sides, where N ≥ 3.

8. A linear guide (1) according to claim 7, wherein if N is an even number, the number n of rolling bearings (4) is N/2 and such rolling bearings (4) are arranged on alternate faces of the polyhedron, or n is N, whereas if N is an odd number, n is N.

9. A linear guide (1) according to claim 8, wherein said regular polygon is a hexagon and the number n of rolling bearings (4) is 3.

10. A linear guide, according to claim 6, wherein the section of said outer tubular element (2) and inner tubular element (2) has a round shape and the number n of rolling bearings (4) is 3.

11. A linear guide (1) according to one of the preceding claims, further comprising means adapted to prevent circumferential displacements of the rolling bearings (4) and/or means adapted to prevent axial displacements of the rolling bearings (4).

12. A linear guide (1) according to one of the preceding claims, comprising an intermediate tubular element, interposed between said outer tubular element (2) and said inner tubular element (3), adapted to slide telescopically in said outer tubular element (2) and for the telescopic sliding of said inner tubular element (3) therein, n first rolling bearings (4) being interposed between the outer tubular element (2) and the intermediate tubular element, and/or n second rolling bearings (4) being interposed between the intermediate tubular element and the inner tubular element (3); the rolling elements of said first rolling bearings (4) being adapted to slide on a first thin sheet (6a) positioned on an outer face of the inner tubular element (3) and on a further thin sheet positioned on a corresponding inner face of the intermediate tubular element and/or the rolling elements of said second rolling bearings (4) being adapted to slide on a further thin sheet positioned on an outer face of the intermediate tubular element and on a second thin sheet (6b) positioned on a corresponding inner face of the outer tubular element (2).

13. A linear actuator comprising at least one linear guide (1) according to one of the claims 1-12.

14. A process for manufacturing a linear guide (1) comprising an outer tubular element (2) made of a composite material; an inner tubular element (3) made of a composite material, adapted to slide telescopically in said outer tubular element (2); and n rolling bearings (4) interposed between said inner tubular element (3) and said outer tubular element (2), said process comprising the steps of:
a. providing n first thin sheets (6a) of metal and n second thin sheets (6b) of metal;
b. engraving a surface of each thin sheet (6a, 6b) by means of photogravure;
c. co-molding the first thin sheets (6a) with the inner tubular element (3) and the second thin sheets (6b) with the outer tubular element (2);
d. coupling the inner tubular element (3) to the outer tubular element (2), inserting it telescopically therein, interposing the aforesaid rolling bearings (4) at the thin sheets (6a, 6b), so that the rolling elements of said rolling bearings (4) slide on said thin sheets (6a, 6b).

15. A process according to claim 14, wherein the step b of engraving a surface of each thin sheet (6a, 6b) by means of photogravure includes engraving, on such a surface, a drawing comprising first grooves which are oblique to the longitudinal axis of the thin sheet (6a, 6b) and second grooves which are oblique to the longitudinal axis of the thin sheet (6a, 6b) and perpendicular to the first grooves.

16. A method of manufacturing an element made of a composite material provided with at least one thin sheet (6a, 6b) of metal in at least one outer surface thereof, comprising the steps of:
i. providing at least one thin sheet (6a, 6b) of metal;
ii. engraving at least one surface of the thin sheet (6a, 6b) by means of photogravure;
iii. co-molding the thin sheet (6a, 6b) with the element made of composite material.

17. A method of manufacturing an element made of a composite material provided with at least one thin sheet (6a, 6b) in at least one outer surface thereof according to claim 16, wherein step iii is preceded by a step of conveniently placing the thin sheet (6a, 6b) inside a die, so that the engraved surface is in contact with the surface of the composite material on completion of molding.

## Patentansprüche

1. Linearführung (1), umfassend: ein äußeres rohrförmiges Element (2); ein inneres rohrförmiges Element (3), das ausgelegt ist, teleskopisch in dem äußeren rohrförmigen Element (2) zu gleiten; und Reibungsreduktionsmittel, die zwischen dem inneren rohrförmigen Element (3) und dem äußeren rohrförmigen Element (2) angeordnet sind, wobei die Reibungsreduktionsmittel n Wälzlager (4) umfassen; wobei n ≥ 1 ist; jedes Wälzlager (4) mit Wälzelementen versehen ist; wobei das äußere rohrförmige Element (2) und das innere rohrförmige Element (3) aus einem Verbundmaterial hergestellt sind und wobei die Wälzelemente auf zwei dünnen Metallblechen (6a, 6b) gleiten; wobei ein erstes dünnes Metallblech (6a) auf einer Außenfläche des inneren rohrförmigen Elements (3) positioniert ist und ein zweites dünnes Metallblech (6b) auf einer entsprechenden Innenfläche des äußeren rohrförmigen Elements (2) positioniert ist.

2. Linearführung (1) nach Anspruch 1, wobei das erste dünne Blech (6a) mit dem inneren rohrförmigen Element (3) mitgeformt ist und das zweite dünne Blech (6b) mit dem äußeren rohrförmigen Element (2) mitgeformt ist.

3. Linearführung (1) nach Anspruch 1 oder 2, wobei die Matrix des Verbundmaterials ein wärmehärtbares Harz ist und die Verstärkung des Verbundmaterials vom Fasertyp ist.

4. Linearführung (1) nach Anspruch 3, wobei das wärmehärtbare Harz ausgewählt ist aus: Epoxidharzen, Polyesterharzen und Vinylesterharzen, und die Verstärkung ausgewählt ist aus: Kohlefasern, Glasfasern, Basaltfasern, Polyesterfasern.

5. Linearführung (1) nach Anspruch 4, wobei das Verbundmaterial Epoxidharz mit Kohlefasern umfasst.

6. Linearführung (1) nach einem der vorhergehenden Ansprüche, wobei das äußere rohrförmige Element (2) und das innere rohrförmige Element (3) eine polyedrische Form mit konstantem Querschnitt aufweisen.

7. Linearführung (1) nach Anspruch 6, wobei der Querschnitt des äußeren rohrförmigen Elements (2) und des inneren rohrförmigen Elements (2) die Form eines regelmäßigen Vielecks mit N Seiten aufweist, wobei N ≥ 3 ist.

8. Linearführung (1) nach Anspruch 7, wobei, wenn N eine gerade Zahl ist, die Anzahl n der Wälzlager (4) N/2 beträgt und diese Wälzlager (4) auf abwechselnden Seiten des Polyeders angeordnet sind, oder n N ist, wohingegen, wenn N eine ungerade Zahl ist, n N ist.

9. Linearführung (1) nach Anspruch 8, wobei das regelmäßige Vieleck ein Sechseck ist und die Anzahl n der Wälzlager (4) 3 beträgt.

10. Linearführung nach Anspruch 6, wobei der Querschnitt des äußeren rohrförmigen Elements (2) und des inneren rohrförmigen Elements (2) eine runde Form aufweist und die Anzahl n der Wälzlager (4) 3 beträgt.

11. Linearführung (1) nach einem der vorhergehenden Ansprüche, ferner umfassend Mittel, die dazu ausgelegt sind, Umfangsverschiebungen der Wälzlager (4) zu verhindern, und/oder Mittel, die dazu ausgelegt sind, Axialverschiebungen der Wälzlager (4) zu verhindern.

12. Linearführung (1) nach einem der vorhergehenden Ansprüche, umfassend ein rohrförmiges Zwischenelement, das zwischen dem äußeren rohrförmigen Element (2) und dem inneren rohrförmigen Element (3) angeordnet ist, das dazu ausgelegt ist, in dem äußeren rohrförmigen Element (2) teleskopartig zu gleiten und das innere rohrförmige Element (3) darin teleskopartig zu verschieben, wobei n erste Wälzlager (4) zwischen dem äußeren rohrförmigen Element (2) und dem rohrförmigen Zwischenelement angeordnet sind, und/oder n zweite Wälzlager (4) zwischen dem rohrförmigen Zwischenelement und dem inneren rohrförmigen Element (3) angeordnet sind; die Wälzelemente der ersten Wälzlager (4) dazu ausgelegt sind, auf ein erstes dünnes Blech (6a), das an einer Außenfläche des inneren rohrförmigen Elements (3) positioniert ist, und auf ein weiteres dünnes Blech, das an einer entsprechenden Innenfläche des rohrförmigen Zwischenelements positioniert ist, zu gleiten und/oder die Wälzelemente der zweiten Wälzlager (4) dazu ausgelegt sind, auf ein weiteres dünnes Blech, das an einer Außenfläche des rohrförmigen Zwischenelements positioniert ist und auf ein zweites dünnes Blech (6b), das an einer entsprechenden Innenfläche des äußeren rohrförmigen Elements (2) positioniert ist, zu gleiten.

13. Linearantrieb umfassend mindestens eine Linearführung (1) nach einem der Ansprüche 1-12.

14. Verfahren zur Herstellung einer Linearführung (1), umfassend ein aus einem Verbundmaterial hergestelltes äußeres rohrförmiges Element (2); ein aus einem Verbundmaterial hergestelltes inneres rohrförmiges Element (3), das dazu ausgelegt ist teleskopisch in dem äußeren rohrförmigen Element (2) zu gleiten; und n Wälzlager (4), die zwischen dem inneren rohrförmigen Element (3) und dem äußeren rohrförmigen Element (2) angeordnet sind, wobei das Verfahren folgende Schritte umfasst:
a. Bereitstellen von n ersten dünnen Metallblechen (6a) und n zweiten dünnen Metallblechen (6b);
b. Gravieren einer Oberfläche jedes dünnen Bleches (6a, 6b) mittels Photogravüre;
c. Mitformen der ersten dünnen Bleche (6a) mit dem inneren rohrförmigen Element (3) und der zweiten dünnen Bleche (6b) mit dem äußeren rohrförmigen Element (2);
d. Kuppeln des inneren rohrförmigen Elements (3) mit dem äußeren rohrförmigen Element (2), indem dieses teleskopartig darin eingesetzt wird, wobei die oben genannten Wälzlager (4) zwischen den dünnen Blechen (6a, 6b) angeordnet werden, so dass die Wälzelemente der genannten Wälzlager (4) auf den dünnen Blechen (6a, 6b) gleiten.

15. Verfahren nach Anspruch 14, wobei der Schritt b des Gravierens einer Oberfläche jedes dünnen Blechs (6a, 6b) mittels Photogravüre das Gravieren auf einer solchen Oberfläche einer Zeichnung beinhaltet, die erste Rillen umfasst, die schräg zur Längsachse des dünnes Blechs (6a, 6b) und zweite Rillen, die schräg zur Längsachse des dünnen Blechs (6a, 6b) und senkrecht zu den ersten Rillen verlaufen.

16. Verfahren zur Herstellung eines aus einem Verbundmaterial hergestellten Elements, das mit mindestens einem dünnen Metallblech (6a, 6b) in mindestens einer Außenfläche davon versehen ist, umfassend folgende Schritte:
i. Bereitstellen mindestens eines dünnen Metallblechs (6a, 6b);
ii. Gravieren mindestens einer Oberfläche des dünnen Blechs (6a, 6b) mittels Photogravüre;
iii. Mitformen des dünnen Blechs (6a, 6b) mit dem aus Verbundmaterial hergestellten Elements.

17. Verfahren zur Herstellung eines aus einem Verbundmaterial hergestellten Elements, das mit mindestens einem dünnen Blech (6a, 6b) in mindestens einer Außenfläche davon nach Anspruch 16 versehen ist, wobei dem Schritt iii ein Schritt der geeigneten Positionierung des dünnen Blechs (6a, 6b) innerhalb einer Matrize vorangeht, so dass die gravierte Oberfläche mit der Oberfläche des Verbundmaterials nach Abschluss der Formgebung in Kontakt ist.

## Revendications

1. Guide linéaire (1) comprenant : un élément tubulaire extérieur (2) ; un élément tubulaire intérieur (3), apte à glisser de manière télescopique dans ledit élément tubulaire extérieur (2) ; et des moyens de réduction de friction interposés entre ledit élément tubulaire intérieur (3) et ledit élément tubulaire extérieur (2), lesdits moyens de réduction de friction comprenant n roulements (4), où n ≥ 1, chaque roulement (4) étant fourni avec des éléments roulants, dans lequel l'élément tubulaire extérieur (2) et l'élément tubulaire intérieur (3) sont faits d'un matériau composite et dans lequel lesdits éléments roulants glissent sur deux feuilles (6a, 6b) de métal fines, une première feuille (6a) de métal fine positionnée sur une face extérieure de l'élément tubulaire intérieur (3) et une deuxième feuille (6b) de métal fine positionnée sur une face intérieure correspondante de l'élément tubulaire extérieur (2).

2. Guide linéaire (1) selon la revendication 1, dans lequel ladite première feuille (6a) fine est co-moulée avec l'élément tubulaire intérieur (3) et ladite deuxième feuille (6b) fine est co-moulée avec ledit élément tubulaire extérieur (2).

3. Guide linéaire (1) selon la revendication 1 ou 2, dans lequel la matrice dudit matériau composite est une résine thermodurcissable et le renforcement dudit matériau composite est de type fibreux.

4. Guide linéaire (1) selon la revendication 3, dans lequel la résine thermodurcissable est sélectionnée parmi : des résines époxy, des résines polyester et des résines vinylester, et le renforcement est sélectionné parmi : des fibres de carbone, des fibres de verre, des fibres de basalte, des fibres de polyester.

5. Guide linéaire (1) selon la revendication 4, dans lequel le matériau composite comprend une résine époxy avec des fibres de carbone.

6. Guide linéaire (1) selon l'une des revendications précédentes, dans lequel ledit élément tubulaire extérieur (2) et ledit élément tubulaire intérieur (3) ont une forme polyédrique avec une section constante.

7. Guide linéaire (1) selon la revendication 6, dans lequel la section desdits élément tubulaire extérieur (2) et élément tubulaire intérieur (2) a la forme d'un polygone régulier avec N côtés, où N ≥ 3.

8. Guide linéaire (1) selon la revendication 7, dans lequel si N est un nombre pair, le nombre n de roulements (4) est N/2 et tels roulements (4) sont disposés sur des faces alternées du polyèdre, ou n est N, alors que si N est un nombre impair, n est N.

9. Guide linéaire (1) selon la revendication 8, dans lequel ledit polygone régulier est un hexagone et le nombre n de roulements (4) est 3.

10. Guide linéaire, selon la revendication 6, dans lequel la section desdits élément tubulaire extérieur (2) et élément tubulaire intérieur (2) a une forme circulaire et le nombre n de roulements (4) est 3.

11. Guide linéaire (1) selon l'une des revendications précédentes, comprenant en outre des moyens aptes à empêcher des déplacements circonférentiels des roulements (4) et/ou des moyens aptes à empêcher des déplacements axiaux des roulements (4).

12. Guide linéaire (1) selon l'une des revendications précédentes, comprenant un élément tubulaire intermédiaire, interposé entre ledit élément tubulaire extérieur (2) et ledit élément tubulaire intérieur (3), apte à glisser de manière télescopique dans ledit élément tubulaire extérieur (2) et pour le glissement télescopique dudit élément tubulaire intérieur (3) dans celui-ci, n premiers roulements (4) étant interposés entre l'élément tubulaire extérieur (2) et l'élément tubulaire intermédiaire, et/ou n deuxièmes roulements (4) étant interposés entre l'élément tubulaire intermédiaire et l'élément tubulaire intérieur (3) ; les éléments roulants desdits premiers roulements (4) étant aptes à glisser sur une première feuille (6a) fine positionnée sur une face extérieure de l'élément tubulaire intérieur (3) et sur une autre feuille fine positionnée sur une face intérieure correspondante de l'élément tubulaire intermédiaire et/ou les éléments roulants desdits deuxièmes roulements (4) étant aptes à glisser sur une autre feuille fine positionnée sur une face extérieure de l'élément tubulaire intermédiaire et sur une deuxième feuille (6b) fine positionnée sur une face intérieure correspondante de l'élément tubulaire extérieur (2).

13. Actionneur linéaire comprenant au moins un guide linéaire (1) selon l'une des revendications 1-12.

14. Procédé de fabrication d'un guide linéaire (1) comprenant un élément tubulaire extérieur (2) fait d'un matériau composite ; un élément tubulaire intérieur (3) fait d'un matériau composite, apte à glisser de manière télescopique dans ledit élément tubulaire extérieur (2) ; et n roulements (4) interposés entre ledit élément tubulaire intérieur (3) et ledit élément tubulaire extérieur (2), ledit procédé comprenant les étapes de :
a. fournir n premières feuilles (6a) de métal fines et n deuxièmes feuilles (6b) de métal fines ;
b. graver une surface de chaque feuille (6a, 6b) fine au moyen d'une photogravure ;
c. co-mouler les premières feuilles (6a) fines avec l'élément tubulaire intérieur (3) et les deuxièmes feuilles (6b) fines avec l'élément tubulaire extérieur (2) ;
d. coupler l'élément tubulaire intérieur (3) à l'élément tubulaire extérieur (2), en l'insérant de manière télescopique à l'intérieur de celui-ci, interposer les roulements (4) susmentionnés au niveau des feuilles (6a, 6b) fines, de sorte que les éléments roulants desdits roulements (4) glissent sur lesdites feuilles (6a, 6b) fines.

15. Procédé selon la revendication 14, dans lequel l'étape b de graver une surface de chaque feuille (6a. 6b) fine au moyen d'une photogravure inclut graver, sur une telle surface, un dessin comprenant des premières rainures qui sont obliques à l'axe longitudinal de la feuille (6a, 6b) fine et des deuxièmes rainures qui sont obliques à l'axe longitudinal de la feuille (6a, 6b) fine et perpendiculaires aux premières rainures.

16. Procédé de fabrication d'un élément fait d'un matériau composite fourni avec au moins une feuille (6a, 6b) de métal fine dans au moins une surface extérieure de celui-ci, comprenant les étapes de :
i. fournir au moins une feuille (6a, 6b) de métal fine ;
ii. graver au moins une surface de la feuille (6a, 6b) fine au moyen d'une photogravure ;
iii. co-mouler la feuille (6a, 6b) fine avec l'élément fait d'un matériau composite.

17. Procédé de fabrication d'un élément fait d'un matériau composite fourni avec au moins une feuille (6a, 6b) fine dans au moins une surface extérieure de celui-ci selon la revendication 16, dans lequel l'étape iii est précédée par une étape de placer commodément la feuille (6a, 6b) fine à l'intérieur d'un moule, de sorte que la surface gravée soit en contact avec la surface du matériau composite à la fin du moulage.
